# EUROPÄISCHE PATENTANMELDUNG

(11) **EP 1 514 727 A2**
(43) Veröffentlichungstag der Anmeldung: **16.03.2005**
(21) Anmeldenummer: 04020770.6
(22) Anmeldetag: 01.09.2004
(51) Int. Cl.: B60P 1/48

(54) **Absetzkipper**

(30) Priorität: 09.09.2003 DE 10342008
(71) Anmelder: Meier-Ratio GmbH, 06844 Dessau (DE)
(72) Erfinder: Meier, Ekkehart, Dipl. Ing., 06862 Rosslau Elbe (DE); Meier, Frank, 06862 Rosslau Elbe (DE)
(74) Vertreter: UEXKÜLL & STOLBERG

(57) **Zusammenfassung**

Die Erfindung betrifft einen Absetzkipper mit einer Ladeplattform zum Aufsetzen einer Transporteinheit und mit zwei am Fahrzeugende angelenkten Schwenkarmen, die jeweils an dem der Anlenkung gegenüberliegenden Lastaufnahmeende Aufhängemittel mit Anschlaghaken zum Verbinden mit der Transporteinheit haben und die durch Hydraulikzylinder schwenkbar sind. Zur sichereren Ausführbarkeit des Kippvorgangs ist vorgesehen, dass am Lastaufnähmeende jedes Schwenkarms (4) eine Anschlagwippe (10) schwenkbar um eine Achse parallel zur Schwenkachse des Schwenkarms (2) gelagert ist und über einen Antrieb in ihrer Winkelstellung zum Schwenkarm (4) einstellbar ist, wobei an jeder Anschlagwippe zwei in ihrer Längsrichtung auf Abstand zueinander befindliche Aufhängemittel (12,12') aufgehängt sind, die über Hebeantriebe längenverstellbar sind, so dass durch Einziehen aller Aufhängemittel (12,12') die Transporteinheit (1) oder die Anschlaghaken (14,14') bis in Eingriff mit den Anschlagwippen (10) anhebbar sind.

## Beschreibung

Die vorliegende Erfindung betrifft einen Absetzkipper mit einer Ladeplattform zum Aufsetzen einer Transporteinheit und mit zwei seitlich am Fahrzeugende angelenkten Schwenkarmen, die jeweils an dem der Anlenkung gegenüberliegenden Lastaufnahmeende Angriffspunkte für Aufhängemittel mit Anschlaghaken zum Verbinden mit der Transporteinheit haben und die durch Hydraulikzylinder schwenkbar sind.

Als Transporteinheiten werden hier zusammenfassend Wechselbehälter, Container, Silos etc. bezeichnet. Häufigster Anwendungsfall sind Absetzkipper mit Wechselbehältern. Absetzkipper dieser Art sind z.B. in der DIN-Norm 30723 beschrieben.

Zum Absetzen oder Aufladen des Wechselbehälters weisen solche Absetzkipper zwei seitlich am Fahrzeugendbereich schwenkbar angebrachte Schwenkarme auf, die über Hydraulikzylinder verschwenkt werden können. An den äußeren Enden (Lastaufnahmeenden) der Schwenkarme sind Angriffspunkte für Aufhängemittel (Ketten oder Seile) zum Einhägen an Aufhängebolzen auf jeder Seite des Wechselbehälters vorgesehen. Regelmäßig sind an Wechselbehältern auf jeder Seite zwei Aufhängebolzen vorgesehen. Nach Einhängen der Aufhängemittel an die beiden Aufhängebolzen auf jeder Seite des Wechselbehälters kann der Wechselbehälter durch Schwenken der Schwenkarme von dem Absetzkipper abgehoben und abgesetzt oder umgekehrt darauf aufgeladen werden.

Zur Ausführung der Kippfunktion sind am Fahrzeugende ein oder mehrere schwenkbare Fanghaken vorgesehen, die, wenn der Wechselbehälter auf der Ladeplattform steht, in eine passende Ausnehmung am Wechselbehälter eingreifen können. Wenn der Wechselbehälter durch solche Fanghaken am Ende gehalten wird, kippt der Behälter beim Zurückschwenken der Schwenkarme um die Schwenkachse der Fanghaken, um den Wechselbehälter zu kippen und zu entleeren.

Diese Konstruktion hat im Hinblick auf die Betriebssicherheit einige Nachteile. Da der Fanghaken mittig am unteren Ende des Wechselbehälters eingreift, ist die Halterung nicht stabil gegenüber Drehbewegungen zu einer Seite des Wechselbehälters hin. In bestimmten Situationen kann sich während des Kippvorgangs auch der (die) schwenkbare(n) Haken von dem Wechselbehälter lösen, woraufhin der Wechselbehälter nach hinten durchschwingen und erhebliche Schäden verursachen kann; in extremen Fällen übt ein durchschwingender Behälter so große Kräfte auf den Absetzkipper aus, dass dieser umstürzen, oder, beispielsweise beim Kippen in eine Mülldeponie, in die Deponie rutschen kann. Bei Einsatz von Behältern mit hohem Lastschwerpunkt ist auch ein Überschlag der Behälter beim Kippvorgang möglich, was mit erheblichen Sachschäden einhergeht.

Bei Schwenkarmen, die als Teleskoparme ausgestaltet sind, besteht bei Betätigungsfehlern auch die Möglichkeit, dass während des Kippvorgangs eine Längenverstellung der Schwenkarme vorgenommen wird, was zum Verbiegen oder Ausreißen der Fanghaken mit anschließendem Durchschwingen des Transportbehälters führen kann.

Es ist Aufgabe der vorliegenden Erfindung, einen Absetzkipper zu schaffen, mit dem der Kippvorgang einfach und sicher ausgeführt werden kann.

Zur Lösung dieser Aufgabe dienen die kennzeichnenden Merkmale des Patentanspruchs 1 in Verbindung mit dessen Oberbegriff. Vorteilhafte Ausführungsformen der Erfindung sind in den Unteransprüchen angegeben.

Erfindungsgemäß ist vorgesehen, dass am Lastaufnahmeende jedes Schwenkarms eine Anschlagwippe schwenkbar gelagert ist, wobei die Schwenkachse der Anschlagwippe im Wesentlichen parallel zur Schwenkachse des Schwenkarms liegt. Jede Anschlagwippe trägt auf auf Abstand zueinander, vorzugsweise beiden Seiten gegenüberliegend zu ihrem Lagerpunkt, Aufhängemittel, die über Hebeantriebe längenverstellbar sind, d.h. die angetrieben von der Anschlagwippe herausgelassen oder gegen diese angezogen werden können. Die Aufhängemittel können, mit ihren Anschlaghaken in die beiden Aufhängebolzen auf jeder Seite der Transporteinheit eingehängt werden. Durch Einziehen der Aufhängemittel mittel der Hebeantriebe kann so die Transporteinheit gegen die Anschlagwippen angehoben werden, bis die Transporteinheit oder die Anschlaghaken so an den Anschlagwippen eingreifen, dass die Transporteinheit dadurch in ihrer Winkelstellung zu den Anschlagwippen festgelegt ist. Die Anschlagwippen sind ferner über einen Antrieb gesteuert in ihrer Winkelstellung zu den Schwenkarmen verstellbar.

Wenn die Aufhängemittel in einer bevorzugten Ausführungsform in gleichem Abstand auf beiden Seiten gegenüberliegend zu dem Lagerpunkt der Anschlagwippe angeordnet sind, wird das zum Kippen der Anschlagwippen benötigte Drehmoment und damit die Anforderungen an die Antriebe zum Schwenken der Anschlagwippen minimiert.

In einer bevorzugten Ausführungsform ist an den Anschlagwippen am Eintrittspunkt jedes Aufhängemittels eine Aufnahme angebracht, die jeweils zur Aufnahme eines Formteil an dem zugehörigen Anschlaghaken ausgestaltet sind, so dass bei Einziehen der Aufhängemittel gegen die Anschlagwippe die Anschlaghaken in den Aufnahmen aufgenommen werden und dort eingreifen. Grundsätzlich können an der Anschlagwippe auch andere Formteile vorgesehen sein, die beim Anheben der Transporteinheit mit komplementären Formteilen an der Transporteinheit in Eingriff treten.

In einer vorteilhaften Ausführungsform sind die Anschlagwippen symmetrisch in Bezug auf ihre Lagerpunkte am Schwenkarm aufgebaut, d.h. insbesondere sind die beiden Aufhängemittel an jeder Anschlagwippe in gleichem Abstand zum Lagerpunkt der Aufhängewippe an dem Schwenkarm aufgehängt, so dass bei gleichmäßiger Gewichtsverteilung in der Transporteinheit die Anschlagwippen wie Waagebalken in der Horizontalen bleiben.

In einer weiteren bevorzugten Ausführungsform ist jeder Schwenkarm als Teleskoparm längenverstellbar ausgestaltet, so dass der Abstand der Anschlagwippen vom Schwenkpunkt der Schwenkarme einstellbar ist.

Durch die erfindungsgemäße Gestaltung wird insbesondere ein besonders einfach und sicher durchführbarer Kippvorgang ermöglicht. Zur Durchführung der Kippfunktion müssen die Aufhängemittel in die Aufhängebolzen an den beiden Seiten der Transporteinheit, die sich auf der Ladeplattform des Absetzkippers befindet, eingehängt sein. Entweder befinden sich die Anschlagwippen bereits in Eingriff mit der Transporteinheit oder diese wird noch durch Einziehen der Aufhängemittel mittels der Hebeantriebe angehoben, bis die Transporteinheit oder die Anschlaghaken in Eingriff mit den Anschlagwippen kommen, z.B indem Formteile an den Anschlaghaken in komplementäre Aufnahmen an den Anschlagwippen eingreifen. Anschließend können die Schwenkarme zurückgeschwenkt und, wenn erwünscht, in ihrer Länge verstellt werden, wobei die Winkelstellung der Anschlagwippen zu den Schwenkarmen automatisch durch Steuerung der Antriebe so geführt wird, dass die Anschlagwippen in ihrer horizontalen Lage bleiben. Wenn die Schwenkarme den Punkt erreicht haben, in dem die Transporteinheit gekippt werden soll, betätigt der Fahrer die Antriebe für die Anschlagwippen, um diese in ihrer Winkelstellung zu den Schwenkarmen in einem gewünschten Maß zu verkippen, so dass die Transporteinheit in entsprechendem Ausmaß gekippt wird. Durch die erfindungsgemäße Gestaltung kann die Transporteinheit in Anlage an den Anschlagwippen festgespannt werden, so dass ihre Winkelstellung fest an die der Anschlagwippen gekoppelt ist. So kann der Kippvorgang einfach durch Schwenken der Anschlagwippen ausgeführt werden. Die Antriebe zur Ausführen der Schwenkbewegung der Anschlagwippen können z.B. hydraulische Antriebe sein.

Die erfindungsgemäße Vorrichtung hat eine Reihe von Vorteilen, von denen einige im Folgenden aufgeführt sind.

Der Kippvorgang kann von dem Fahrer vom Fahrerhaus aus ausgelöst werden, ohne dass er dazu aussteigen muss, da die Gefahren, wie sie im Stand der Technik gegeben waren, entfallen. Der Fahrer kann einfach ausführen, indem die Aufhängemittel angezogen werden, falls dies nicht schon der Fall ist, bis die Transporteinheit an den Anschlagwippen fest anliegt, dann die Schwenkarme in eine gewünschte Kippposition nach hinten geschwenkt und darauf die Anschlagwippen zum Schwenken betätigt werden, wodurch die daran festgespannte Transporteinheit entsprechend gekippt wird. Dadurch wird nicht nur der Bedienungskomfort für den Fahrer verbessert, sondern auch die Sicherheit beim Kippvorgang erhöht, da kein Durchschwingen der Transporteinheit mehr möglich ist.

Darüber hinaus kann der Kippvorgang in jeder gewünschten Schwenkstellung der Schwenkarme und jeder Längenstellung der Schwenkarme, falls diese als Teleskoparme ausgebildet sind, durchgeführt werden, was die Flexibilität und Einsetzbarkeit des Absetzkippers erheblich erhöht.

Außerdem können keine Schäden am Kipphaken und am Kipplager am Behälter mehr auftreten.

Ferner ist eine niedrigere Bauweise der Schwenkarme möglich, da diese mit ihren Lastaufnahmeenden nicht mehr über die Transporteinheit hinausragen müssen, wenn die Transporteinheit von dem Absetzkipper abgesetzt werden soll oder vom Boden aufgenommen und auf den Kipper aufgesetzt werden soll. Bei dem erfindungsgemäßen Aufbau ist es nämlich ausreichend, wenn die Lastaufnahmeenden mit den Anschlagwippen in der Transportstellung der Schwenkarme bei auf der Ladeplattform aufgesetzter Transporteinheit seitlich davon etwas oberhalb der beiden Anschlagbolzen an den beiden Seiten der Transporteinheit liegen. Da die Anschlagbolzen typischerweise etwas oberhalb der Mitte der Höhe der Transporteinheit liegen, brauchen die Schwenkarme nur bis kurz über die durch die Anschlagbolzen vorgegebene Höhe hinauszuragen, können aber unterhalb des oberen Randes der Transporteinheit bleiben. Im Gegensatz dazu liegen die oberen Lastaufnahmeenden bei herkömmlichen Absetzkippern stets deutlich oberhalb der Transporteinheit.

Ferner ist die Standsicherheit des Absetzkippers bei der Aufnahme oder beim Absetzen der Transporteinheit besser. Dies ist dadurch begründet, dass die Schwenkarme kürzer ausgebildet sein können und weniger weit zurückschwenken müssen als im Stand der Technik, da sie zum Absetzen oder Aufnehmen der Transporteinheit auch bei geringfügigerer Zurückschwenkung des kürzeren Schwenkarms den Absetzvorgang bzw. die Aufnahme durch Herauslassen bzw. Anheben der Aufhängemittel ausführen können. Dadurch ist die Hebelwirkung der aufgenommenen oder abgesetzten Last der Transporteinheit weniger stark, wodurch die Standsicherheit des Absetzkippers erhöht ist.

Ferner kann durch den erfindungsgemäßen Absetzkipper eine bessere Unterflurreichweite erreicht werden. Darunter versteht man die Fähigkeit des Absetzkippers, eine Transporteinheit auf oder von einer Auflagefläche absetzen oder davon anheben zu können, die in ihrem Höhenniveau unterhalb der Standfläche liegt, auf der der Absetzkipper steht. Bei herkömmlichen Absetzkippern müssen, falls eine solche Aufnahme einer Transporteinheit erfolgen soll, die weit unterhalb der Standfläche des Absetzkippers steht, die Schwenkarme so weit zurückgeschwenkt werden, dass ihre Lastaufnahmeenden bis kurz oberhalb der tiefer liegenden Transporteinheit liegen, damit die Kettengehänge in deren Anschlagbolzen eingehängt werden können. Dazu kann es in Exremfällen nötig sein, dass die Schwenkarme nach hinten bis unter das Niveau der Ladeplattform zurückschwenken müssen. Entsprechendes gilt für ein Absetzen der Transporteinheit auf ein tieferes Standniveau. Aber auch bei Absetzkippern, die ein weites Zurückschwenken der Schwenkarme erlauben, ist klar, dass ihre "Reichweite" zur Aufnahme und zum Absetzen von Transporteinheiten unterhalb der Standfläche des Absetzkippers begrenzt ist. Mit der erfindungsgemäßen Gestaltung können die Schwenkarme einfach in eine Stellung zurückgeschwenkt werden, in der die Lastaufnahmeenden zwar etwa vertikal oberhalb der Transporteinheit liegen, davon aber einen erheblichen vertikalen Abstand haben können. Dann werden die Aufhängemittel zum Aufnehmen der Transporteinheit so weit herausgefahren, bis die Anschlaghaken in die Anschlagbölzen der Transporteinheit einhängbar sind. Anschließend werden die Antriebe der Aufhängemittel betätigt, um so die Transporteinheit im Wesentlichen vertikal zu den Anschlagwippen anzuheben. Daraufhin kann die Transporteinheit durch Schwenken der Schwenkarme auf die Transportplattform des Absetzkippers aufgestellt werden. Entsprechendes gilt umgekehrt beim Absetzen auf eine tiefere Standfläche. Bei der erfindungsgemäßen Gestaltung ist die Unterflurreichweite nur durch die Gesamtlänge der Aufhängemittel begrenzt.

Ferner kann mit der erfindungsgemäßen Gestaltung auch eine Transportsicherung für die Transporteinheit auf der Ladeplattform des Absetzkippers realisiert werden. Dazu können die Schwenkarme mit den Anschlagwippen so über die Aufhängebolzen der Transporteinheit gefahren werden, dass die Anschlagwippen gegen die Aufhängebolzen angepresst werden, wodurch die Transporteinheit auf der Ladeplattform festgesetzt wird. Diese Ladungssicherung kann vom Fahrer vom Führerhaus aus vorgenommen werden, so dass weitere Maßnahmen mit Mitteln zum Verzurren der Transporteinheit zu ihrer Sicherung überflüssig sind.

Ein weiterer Vorteil der erfindungsgemäßen Gestaltung besteht darin, dass der Absetzkipper einen abgestellten Behälter auch dann gut aufnehmen kann, wenn der Behälter mit seiner Längsachse schräg zur Längsachse des Absetzkippers steht und dieser den Behälter nicht besser anfahren kann. In einer solchen Situation werden die Schwenkarme mit den Anschlagwippen über den Behälter zurückgeschwenkt und dann die Aushängemittel herausgefahren, bis die Anschlaghaken in die Aufhängenbolzen eingehgängt werden können. Daraufhin betätigt der Fahrer die Hebeantriebe der Aufhängemittel leicht, ohne dass der Behälter vollständig vom Boden abhebt. Durch die reduzierte Gewichtskraft und die entsprechend reduzierte Reibung des Behälters "rutscht" dieser dann herum, bis er im Wesentlichen mit seiner Längsachse parallel zu den Längsachsen der Anschlagwippen und damit zur Längsachse des Fahrzeugs steht.

Die Erfindung wird im Folgenden anhand eines Ausführungsbeispiels in den Zeichnungen näher erläutert, in denen:
Figur 1 eine schematische Darstellung der Ladeplattform und eines Schwenkarms für einen Absetzkipper zeigt;
Figur 2 eine Figur 1 entsprechende Darstellung mit dem Schwenkarm in zurückgeschwenkter Stellung zur Aufnahme einer Transporteinheit zeigt; und
Figur 3 eine Figuren 1 und 2 entsprechende Darstellung mit zurückgeschwenktem Schwenkarm bei Ausführung eines Kippvorgangs zeigt.

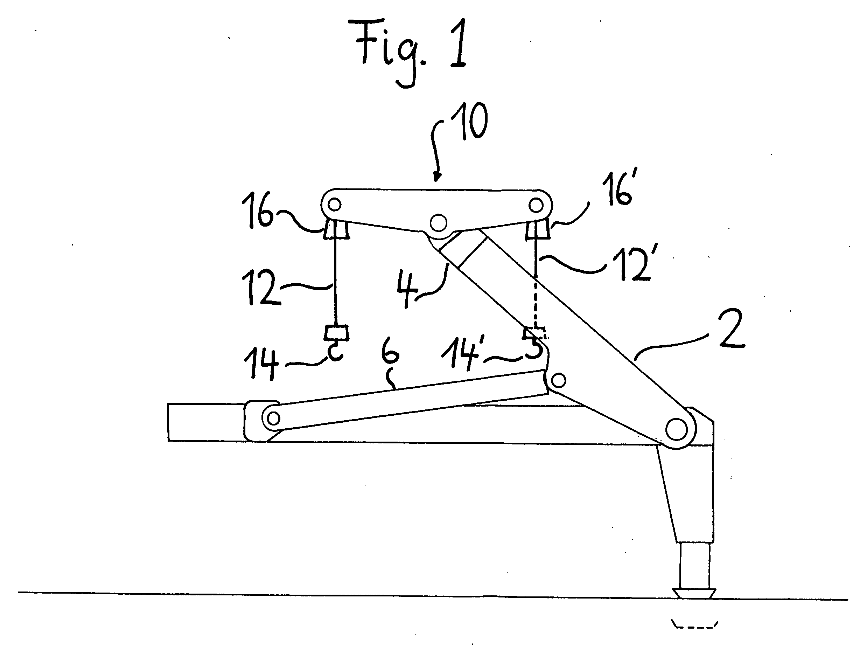

Figur 1 zeigt eine schematische, stark vereinfachte seitliche Ansicht des Absetzkippers, wobei aus Gründen der Übersichtlichkeit hier alle im vorliegenden Zusammenhang nicht relevanten Komponenten fortgelassen sind. Dargestellt ist das rückwärtige Ende der Ladeplattform mit ausgefahrenem Standfuß zur Stabilisierung des Absetzkippers. Am Ende der Ladeplattform ist auf jeder Seite ein Schwenkarm 2 angelenkt, der über einen Hydraulikzylinder 6 schwenkbar ist.

Am äußeren Lastaufnahmeende des Schwenkarms 2 ist schwenkbar eine Anschlagwippe 10 gelagert, wobei die Schwenkachsen der Anschlagwippe 10 und des Schwenkarms 2 parallel verlaufen. Es ist ein Antrieb (nicht gezeigt) vorgesehen, um die Schwenkstellung der Anschlagwippe 10 relativ zum Schwenkarm 2 einstellen zu können. Dabei kann es sich zum Beispiel um einen hydraulischen Antrieb handeln.

Es sind Aufhängemittel 12, 12', in Form von Ketten oder Seilen, vorgesehen, die an der Anschlagwippe 10 an zu ihrem Lagerpunkt am Schwenkarm 2 gegenüberliegende Enden aufgehängt sind. Es sind Hebeantriebe (nicht gezeigt), in Form von Ketten- oder Seiltrieben, vorhanden, mit denen die Aufhängemittel 12, 12' angehoben und abgesenkt werden können. An ihrem unteren Ende sind die Aufhängemittel 12, 12' mit Anschlaghaken 14, 14' versehen. Im vorliegenden Ausführungsbeispiel weisen die Anschlaghaken 14, 14' jeweils ein kegelstumpfförmiges Formteil auf, das dazu vorgesehen ist, in einer entsprechenden komplementären Aufnahme 16, 16' an der Anschlagwippe aufgenommen zu werden, wenn die Aufhängemittel 12, 12' durch die Hebeantriebe vollständig eingezogen werden.

Es sei angemerkt, dass Figur 1 eine schematische Draufsicht auf die Außenseite des Schwenkarms 2 zeigt, wobei aus Gründen der Vereinfachung der Darstellung die Anschlagwippe 10 so dargestellt ist, als ob sie außen an der Außenseite des Schwenkarms 2 angebracht ist. Tatsächlich ist die Anschlagwippe 10 vorzugsweise innen an dem Schwenkarm 2 angebracht, so dass sie im Wesentlichen oberhalb der Anschlagbolzen der Transporteinheit liegen, wenn sich die Transporteinheit zwischen den Schwenkarmen 2 auf der Ladeplattform befindet.

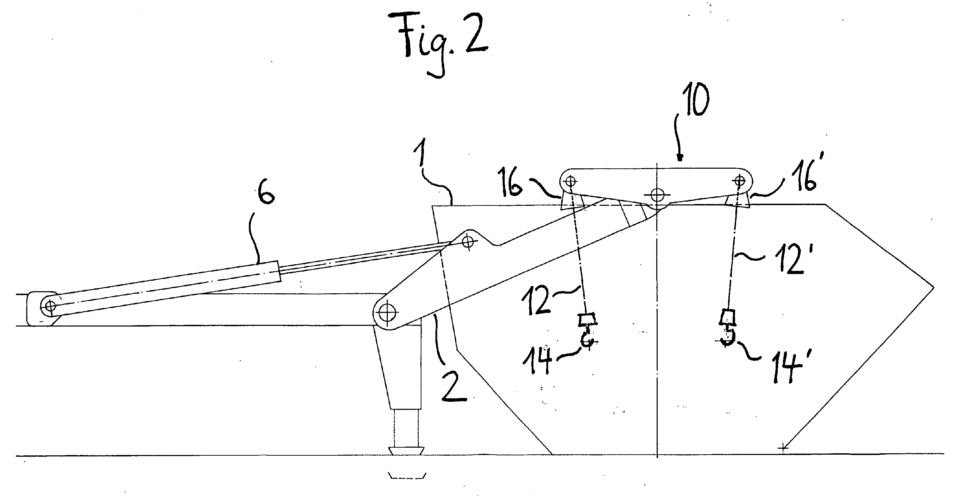

Figur 2 zeigt eine entsprechende vereinfachte Seitenansicht der im Zusammenhang mit der vorliegenden Erfindung wesentlichen Komponenten des Absetzkippers bei der Aufnahme oder beim Absetzen einer Transporteinheit 1.

Im Folgenden wird zunächst der Vorgang der Aufnahme der Transporteinheit 1 mit dem erfindungsgemäßen Absetzkipper beschrieben. Zunächst schwenkt der Fahrer die Schwenkarme 2 zurück, so dass die Anschlagwippen 10 im Wesentlichen oberhalb der Anschlagbolzen an der Transporteinheit 10 liegen, und betätigt die Hebeantriebe für die Anschlaghaken 14, 14', um diese so weit herauszufahren, dass sie in die Anschlagbolzen an der Transporteinheit 1 eingehängt werden können. Danach verlässt der Fahrer das Führerhaus und hängt die Anschlaghaken 14, 14' in die Anschlagbolzen an der Transporteinheit ein. Anschließend kann der Fahrer die Hebeantriebe für die Aufhängemittel 12, 12' betätigen, um die Transporteinheit 1 zunächst anzuheben. Er kann sie, wenn gewünscht, so weit anheben, bis die kegelstumpfförmigen Formteile an den Anschlaghaken 14, 14' in die komplementären Aufnahmen 16, 16' an der Anschlagwippe 10 eingreifen. Dies ist jedoch für den reinen Aufnahmevorgang an sich nicht erforderlich. Jedenfalls muss der Fahrer die Schwenkarme 2 durch Betätigung der Hydraulikzylinder 6 zurück in Richtung der Ladeplattform schwenken, wobei die Anschlagwippen 10, vorzugsweise automatisch, durch ihre Antriebe so gesteuert werden, dass sie während des gesamten Schwenkvorgangs der Schwenkarme 2 im Wesentlichen horizontal bleiben. Dies kann z.B. durch eine Steuereinrichtung geschehen, in der ein Pendel aufgehängt ist und die mit Sensoren versehen ist, die eine Auslenkung des Pendels aus der Vertikalen signalisieren und ein entsprechendes Steuersignal für den Schwenkantrieb der Anschlagwippe 10 liefert.

Es ist anhand von Figur 2 ohne weiteres erkennbar, dass mit der erfindungsgemäßen Gestaltung die sogenannte Unterflurreichweite erheblich erweitert ist, da bei gleicher Stellung der Schwenkarme 2 auch Transporteinheiten 1 aufgenommen werden können, die weit unterhalb der dargestellten Ebene abgestellt sind. Zu diesem Zweck müssen lediglich die Aufhängemittel 12, 12' entsprechend weiter herausgelassen werden. Auf diese Weise können auch Transporteinheiten aufgenommen werden, die sich viele Meter unterhalb der Standebene des Absetzkippers befinden. Diese Unterflurreichweite ist im Wesentlichen nur durch die vorgesehene Länge der Aufhängemittel 12, 12' begrenzt.

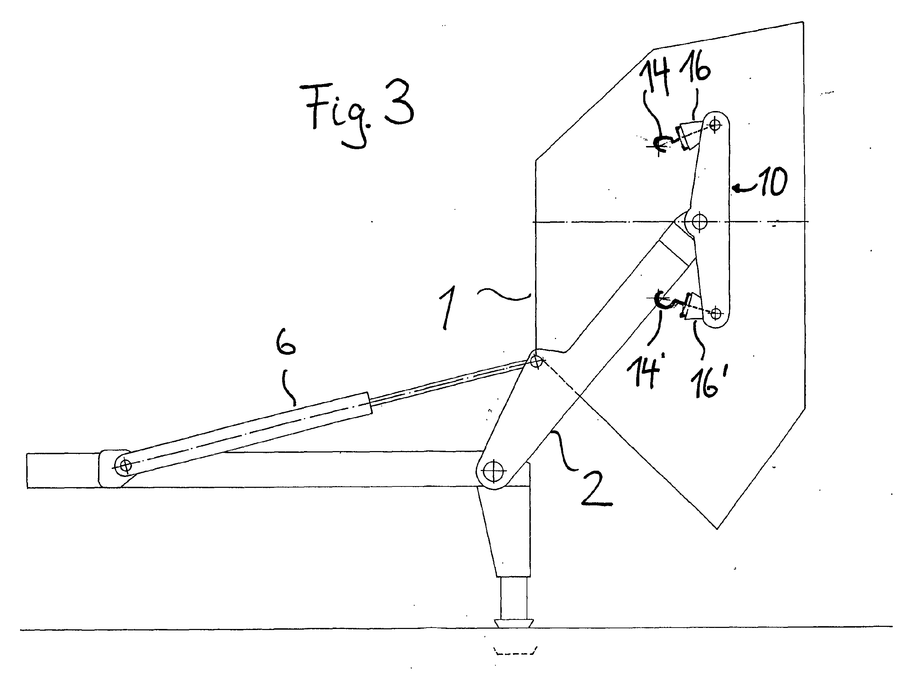

In Figur 3 ist der erfindungsgemäße Absetzkipper bei Ausführung einer Kippfunktion gezeigt. Zur Ausführung der Kippfunktion wird die auf der Ladeplattform stehende Transporteinheit 1 mit den eingehängten Anschlaghaken 14, 14' durch die Betätigung der Hebeantriebe zunächst so weit gegen die Anschlagwippe 10 angehoben, dass die an den Anschlaghaken 14, 14' vorgesehenen kegelstumpfförmigen Formteile in die entsprechenden komplementären Aufnahmen 16, 16' an der Anschlagwippe 10 eingreifen und dort spielfrei festsitzen. Anschließend wird der Schwenkarm 2 zurückgeschwenkt, wobei in der Anfangsphase die Steuerung des Schwenkantriebs der Anschlagwippe für deren horizontale Ausrichtung sorgt, damit der Behälter nicht vorzeitig geneigt wird. In einer gewünschten Stellung der Schwenkarme 2, z.B. der in Figur 3 gezeigten, kann der Fahrer dann den Schwenkantrieb der Anschlagwippen 10 betätigen, um diese im Wesentlichen in vertikale Ausrichtung zu bringen, wobei die an den Anschlagwippen 10 festgespannte Transporteinheit 10 dann entsprechend um 90° gedreht wird, wie in Figur 3 dargestellt ist.

Es ist ohne weiteres ersichtlich, dass nicht unbedingt Formteile an den Anschlaghaken 14, 14' in entsprechende Aufnahmen an den Anschlagwippen 10 eingreifen müssen. Genausogut können andere Formteile, z.B. auch direkt an der Transporteinheit vorgesehen sein, die in entsprechende Aufnahmen an der Anschlagwippe 10 eingreifen, sofern dafür gesorgt wird, dass bei Anziehen der Aufhängemittel 12, 12' gegen die Anschlagwippe ein Eingriff zwischen Transporteinheit und Anschlagwippen 10 zustande kommt, so dass die Tranporteinheit in ihrer Winkelstellung zu den Schwenkarmen 2 festgespannt wird.

Es ist anhand von Figur 3 auch ersichtlich, dass mit dem erfindungsgemäßen Absetzkipper der Kippvorgang grundsätzlich in jeder beliebigen Stellung der Schwenkarme 2 durchgeführt werden kann, wobei neben der Schwenkstellung der Schwenkarme 2 auch die Längsausstellung eines teleskopierbaren Armteils 4 (siehe Figur 1) variabel ist.

Anhand von Figur 3 ist auch zu erkennen, dass der vorzugsweise hydraulische Schwenkantrieb für die Anschlagwippen 10 keine zu großen Drehmomente aufbringen muss, um die Transporteinheit zu kippen, da der Schwerpunkt der gegen die Anschlagwippen 10 angehobenen Transporteinheit 1 relativ nahe an der Schwenkachse der Anschlagwippe 10 liegt.

Anhand von Figur 2 ist auch zu erkennen, dass die Standsicherheit des Absetzkippers beim Aufnehmen oder Absetzen der Transporteinheit gegenüber dem Stand der Technik erhöht ist, da der Absetzkipper relativ nahe an der Transporteinheit 1 stehen kann, wenn diese aufgenommen oder abgesetzt werden soll. Anders ausgedrückt sind die Schwenkarme 2 gegenüber dem Stand der Technik mit kürzerer Länge ausgebildet, da das äußere Ende der Schwenkarme 2 bei der Aufnahme der Transporteinheit 1 lediglich geringfügig oberhalb der Anschlagbolzen an der Transporteinheit liegen muss. Umgekehrt brauchen die zurückgeschwenkten Schwenkarme 2 in ihrer Transportstellung mit ihren äußeren Enden nicht über die auf die Ladeplattform 1 aufgestellte Transporteinheit hinauszuragen.

Mit dem erfindungsgemäßen Absetzkipper kann auch eine automatisch zu betätigende Transportsicherung der Transporteinheit 1 auf der Ladeplattform vorgenommen werden, indem die Anschlagwippen 10 bei eingehängtem Anschlaghaken 14, 14' an der Transporteinheit durch Längenverkürzung des teleskopierbaren Armteils 4 gegen die Anschlagbolzen angedrückt werden, so dass die Transporteinheit auf der Ladeplattform festgespannt wird.

## Patentansprüche

1. Absetzkipper mit einer Ladeplattform zum Aufsetzen einer Transporteinheit und mit zwei seitlich am Fahrzeugende angelenkten Schwenkarmen, die jeweils an dem der Anlenkung gegenüberliegenden Lastaufnahmeende Aufhängemittel mit Anschlaghaken zum Verbinden mit der Transporteinheit haben und die durch Hydraulikzylinder schwenkbar sind, **dadurch gekennzeichnet, dass** am Lastaufnahmeende jedes Schwenkarms (4) eine Anschlagwippe (10) schwenkbar um eine Achse parallel zur Schwenkachse des Schwenkarms (2) gelagert ist und über einen Antrieb in ihrer Winkelstellung zum Schwenkarm (4) einstellbar ist, wobei an jeder Anschlagwippe zwei in deren Längsrichtung auf Abstand zueinander befindliche Aufhängemittel (12, 12') aufgehängt sind, die über Hebeantriebe längenverstellbar sind, so dass durch Einziehen aller Aufhängemittel (12, 12') die Transporteinheit (1) oder die Anschlaghaken (14, 14') bis in Eingriff mit den Anschlagwippen (10) anhebbar sind, so dass die Winkelstellung der Transporteinheit (1) zu den Anschlagwippen (10) festgelegt ist und die Transporteinheit (1) so mit den Anschlagwippen (10) schwenkbar ist.

2. Absetzkipper nach Anspruch 1, **dadurch gekennzeichnet, dass** jede Anschlagwippe (10) so angeordnet an dem zugehörigen Schwenkarm gelagert ist, dass die beiden Aufhängemittel (12, 12') auf beiden Seiten gegenüberliegend zu dem Lagerpunkt aufgehängt sind.

3. Absetzkipper nach Anspruch 2, **dadurch gekennzeichnet, dass** die Aufhängemittel (12, 12') an jeder Anschlagwippe (10) in gleichem Abstand zu dem Lagerpunkt der Anschlagwippe (10) am Schwenkarm aufgehängt sind.

4. Absetzkipper nach einem der vorhergehenden Ansprüche, **dadurch gekennzeichnet, dass** an jeder Anschlagwippe (10) am Eintrittspunkt jedes Aufhängemittels (12, 12') eine Aufnahme (16, 16') angebracht ist, die jeweils zur Aufnahme eines mit dem zugehörigen Anschlaghaken (14, 14') verbundenen Formteils ausgestaltet sind, so dass bei Einziehen der Aufhängemittel (14, 14') die Formteile der Anschlaghaken spielfrei in die in die Aufnahmen (16, 16') eingreifen.

5. Absetzkipper nach Anspruch 3 oder 4, **dadurch gekennzeichnet, dass** jede Anschlagwippe (10) symmetrisch in Bezug auf ihren Lagerpunkt am Schwenkarm (4) aufgebaut ist.

6. Absetzkipper nach einem der vorhergehenden Ansprüche, **dadurch gekennzeichnet, dass** jeder Schwenkarm (4) als Teleskoparm längenverstellbar gestaltet ist, wodurch der Abstand der Anschlagwippen (10) vom Schwenkpunkt der Schwenkarme (4) einstellbar ist.
